# EUROPÄISCHE PATENTSCHRIFT

(11) **EP 3 789 630 B1**
(45) Veröffentlichungstag und Bekanntmachung des Hinweises auf die Patenterteilung: **17.07.2024**
(21) Anmeldenummer: 20190104.8
(22) Anmeldetag: 07.08.2020
(51) Int. Cl.: F16F 9/04

(54) **LUFTFEDERBALG UND VERFAHREN ZUR HERSTELLUNG DESSELBEN**
AIR SPRING AND METHOD FOR MANUFACTURING THE SAME
SOUFFLET PNEUMATIQUE ET PROCÉDÉ DE FABRICATION D'UN TEL SOUFFLET PNEUMATIQUE

(30) Priorität: 30.08.2019 DE 102019213087
(43) Veröffentlichungstag der Anmeldung: 10.03.2021
(73) Patentinhaber: ContiTech Deutschland GmbH, 30175 Hannover (DE)
(72) Erfinder: Kranz, Harald, 30419 Hannover (DE)
(74) Vertreter: Continental Corporation

(56) Entgegenhaltungen:
- EP-A1- 0 529 435
- EP-B1- 0 529 435
- US-A- 3 549 142

## Beschreibung

Die Erfindung betrifft einen Luftfederbalg einer Luftfeder, welcher mit seinen beiden offenen Enden an Anschlussteilen von zwei gegeneinander beabstandeten Bauteilen dichtend befestigbar ist, und der im montiertem Zustand der Luftfeder einen mit Druckluft gefüllten Arbeitsraum wenigstens teilweise begrenzt, wobei der Luftfederbalg aus einem Elastomer gebildet ist, in dem ein gewebeförmiger Festigkeitsträger sowie in wenigstens einem endseitigen Wulst ein ringförmiger Kern eingebettet ist, und bei dem der wenigstens eine Kern von dem gewebeförmigen Festigkeitsträger zumindest teilweise umschlungen ist. Außerdem betrifft die Erfindung ein Verfahren zur Herstellung eines solchen Luftfederbalgs sowie eine Luftfeder mit einem solchen Luftfederbalg.

Luftfedern sind in einer Vielzahl von Ausführungen für Anwendungen in verschiedenen Bereichen bekannt. Eingespannt zwischen Fahrwerk und Karosserie werden sie beispielsweise häufig in Straßen- oder Schienenfahrzeugen eingesetzt, um eine komfortable Federung zu erreichen. Eine derartige Luftfeder weist einen Luftfederbalg auf, an dessen beiden offenen Enden Wülste ausgebildet sind, über die der Luftfederbalg an den Anschlussteilen Luftfederdeckel und Luftfederkolben befestigt ist, wobei der Luftfederbalg einen mit Druckluft gefüllten Arbeitsraum begrenzt. Die Luftfeder steht im Betrieb unter einem inneren Überdruck, wobei der Luftfederbalg bei einer Belastung und bei Federbewegungen zusammengedrückt beziehungsweise bei Entlastung auseinandergedrückt wird. Ein als Rollbalg ausgebildeter Luftfederbalg rollt bei Federbewegungen unter Bildung einer Rollfalte auf einer Außenkontur des Luftfederkolbens ab. Ein als Faltenbalg ausgebildeter Luftfederbalg bläht sich auf beziehungsweise zieht sich zusammen. Der meistens plattenförmig ausgebildete Luftfederdeckel befindet sich, in der Gebrauchslage der Luftfeder gesehen, üblicherweise oben auf dem Balg, der Luftfederkolben unten. Im Falle einer Fahrgestell-Luftfeder ist der Luftfederdeckel die Schnittstelle zum Fahrzeugrahmen, zum Aufbau oder zum Chassis. Der Luftfederkolben stellt die Schnittstelle zur Fahrzeugachse dar.

Ein Luftfederbalg besteht üblicherweise aus einer Elastomermatrix mit einer äußeren Elastomerschicht und einer inneren Elastomerschicht, welche die Außenseite beziehungsweise die Innenseite der Balgwand des Luftfederbalgs bilden. In der Elastomermatrix ist in der Regel zur Verstärkung ein Festigkeitsträger eingebettet. Der Festigkeitsträger besteht meistens aus mehreren Gewebelagen, deren Fäden in Winkeln den Balg umlaufen, wobei die einzelnen Gewebelagen so übereinanderliegen, dass sich die Fadenwinkel der Gewebelagen geometrisch spiegeln und sich die Fäden im fertigen Balg kreuzen.

An den axialen Balgenden solcher Luftfederbälge befinden sich in üblicherweise wulstartige Verdickungen mit darin eingebetteten ringförmigen Kernen. Diese Kerne bestehen beispielsweise aus rundem oder rechteckigem Stahldraht und dienen dazu, den Luftfederbalg dort zu klemmen und druckdicht an einem Anschlussteil wie Kolben, Deckel, Felge, Platte oder ähnlichem anzuschließen. Außer der Klemmung des Luftfederbalges dienen die Wülste beziehungsweise die Kerne dazu, die einzelnen Gewebelagen des Festigkeitsträgers zu fixieren und die auf diese Gewebelagen wirkendenden Zugspannungen aufzunehmen.

Bei der Balgherstellung wird zunächst eine erste Elastomerlage auf einem zylindrischen Wickelwerkzeug abgelegt. Darauf wird dann eine Lage des Festigkeitsträgers gelegt. Sodann wird zumindest ein Kern endseitig auf den Festigkeitsträger abgelegt. Anschließend werden die freien Enden der Gewebelagen des Festigkeitsträgers von einem Facharbeiter in aufwendiger Handarbeit um den wenigstens einen Kern geschlungen und noch wenige Zentimeter weiter auf die Gewebelage des Festigkeitsträgers beziehungsweise auf die erste Elastomerlage abgelegt sowie dort angedrückt. Bei dem anschließenden Vulkanisiervorgang des Rohlings werden die Enden der Gewebelagen bündig mit der Balgwand durch die Elastomerschichten anvulkanisiert. Bei Bedarf kann zuvor auch eine zweite Elastomerlage auf den Wickel abgelegt worden sein.

Die Befestigung beziehungsweise die Einspannung des Luftfederbalges an den Anschlussteilen zum Fahrzeugrahmen beziehungsweise zur Fahrzeugachse muss relativ starken Bewegungen der Luftfederung standhalten. Dabei hat sich die anvulkanisierte Verbindung der freien Enden der Gewebelagen des Festigkeitsträgers mit der Balgwand nahe am Einspannbereich des Luftfederdeckels oder des Luftfederkolbens als eine Schwachstelle herausgestellt. Diese freien Enden der Gewebelagen können sich später im Einsatz von der Balgwand lösen, wodurch die Festigkeit im besonders stark beanspruchten Einspannbereich beeinträchtigt ist. Dieses Phänomen ist auch als sogenannter Schlingenaufriss bekannt. An den gelösten freien Enden der Gewebelagen können zudem Feuchtigkeit und Partikel in den genannten Arbeitsraum eindringen. In ungünstigen Fällen kann dies zur Undichtigkeit des Balgs oder zum Ablösen des Balgs von einem Anschlussteil und damit zum Totalausfall der betreffenden Luftfeder führen.

Das geschilderte Problem besteht insbesondere bei Luftfederungen von Schienenfahrzeugen, da diese mehr als bei Luftfedern von Straßenfahrzeugen neben den normalen axialen auch starke laterale und verdrehende Bewegungen aufnehmen. Dadurch entstehen in den Einspannbereichen der Wülste Relativbewegungen, die zu einem starken Verschleiß der Luftfeder führen können. Ein Lösen der freien Enden der Gewebelagen des Festigkeitsträgers wird insbesondere bei der genannten lateralen Auslenkung des Balges hervorgerufen, da dann durch die unterschiedlichen Relativbewegungen der einzelnen Gummi- und Gewebelagen Spannungsspitzen entstehen, die letztendlich für den Ablösevorgang verantwortlich sind.

Außerdem werden bei Schienenfahrzeugfederungen häufig sogenannte Gürtelbälge eingesetzt. Dies sind als Faltenbälge ausgebildete Luftfederbälge, die zur Erhöhung der Stabilität der Luftfeder einen zusätzlichen, meistens als Stahlgürtel ausgebildeten Mittelring aufweisen. Der Mittelring beziehungsweise Stahlgürtel ist zwar durch Bombieren des Rohlings etwa mittig in Axialrichtung am Balg positioniert, jedoch dort nicht sicher fixiert. Daher ist ein zusätzlicher Scheuerschutz notwendig, der aufwendig auf die Balgwand im Bereich des Stahlgürtels aufgebracht werden muss, um eine Beschädigung der Balgwand durch Scheuerbewegungen des Gürtels zu vermeiden.

Die DE 10 2013 108 694 A1 zeigt eine Luftfedereinrichtung eines Schienenfahrzeugs mit einem zwischen Karosserie und Fahrwerksteil angeordnetem Luftfederbalg, welcher mit im Balgmaterial eingebetteten und als Gewebelagen ausgebildeten Festigkeitsträgern versehen ist. Der Luftfederbalg weist an mindestens einem seiner beiden Enden einen Anschluss- und Verstärkungsquerschnitt zur Einspannung des Luftfederbalges an entsprechend ausgebildeten Anschlussteilen von Karosserie und/oder Fahrwerksteil auf. Die Gewebelagen sind im Bereich des Anschluss- und Verstärkungsquerschnitts sowie innerhalb des elastischen Balgmaterials in sich eingerollt ausgebildet und bilden durch die Einrollung einen Wulstring zur Einspannung des Luftfederbalgs. Bei diesem Luftfederbalg werden zwar freie Enden der Gewebelagen und deren Ablösung von der Balgwand vermieden, allerdings wird auf stabilisierende Wulstkerne in Form von Stahldrähten oder dergleichen gänzlich verzichtet.

Das Dokument US 3 549 142 A, welches als der nächstliegende Stand der Technik angesehen wird, offenbart die Merkmale des Oberbegriffs des Anspruchs 1.

Vor diesem Hintergrund lag der Erfindung die Aufgabe zugrunde, ein Luftfederbalg eingangs genannter Art vorzustellen, bei dem die beschriebenen Nachteile zumindest weitgehend nicht vorhanden sind und der betriebssicher ist. Insbesondere sollen die Enden des Luftfederbalgs starke mehrdimensionale Belastungen aufnehmen können, ohne dass der Balg vorzeitig verschleißt. Außerdem soll ein Verfahren zur Herstellung eines solchen Luftfederbalgs vorgestellt werden. Zudem sollen ein solcher Luftfederbalg und eine damit ausgebildete Luftfeder für den Einsatz in Luftfedersystemen von Schienenfahrzeugen geeignet sein.

Die Lösung dieser Aufgabe ergibt sich aus den Merkmalen der unabhängigen Ansprüche, während vorteilhafte Ausgestaltungen und Weiterbildungen der Erfindung den abhängigen Ansprüchen entnehmbar sind.

Der Erfindung lag die Erkenntnis zugrunde, dass die gestiegenen Belastungen und Komfortansprüche an Luftfedern, insbesondere bei Schienenfahrzeugen, einer verbesserten, sicheren und verschleißfesten Gestaltung des Luftfederbalgs bedürfen. Dies kann konstruktiv durch eine neue Anordnung und Formgebung der Gewebelagen eines Festigkeitsträgers des Luftfederbalgs unter Einbeziehung von in endseitigen Wülsten des Luftfederbalgs eingebetteten Kernen ermöglicht werden.

Die Erfindung betrifft demnach einen Luftfederbalg einer Luftfeder, welcher mit seinen beiden offenen Enden an Anschlussteilen von zwei gegeneinander beabstandeten Bauteilen dichtend befestigbar ist, und der im montiertem Zustand der Luftfeder einen mit Druckluft gefüllten Arbeitsraum wenigstens teilweise begrenzt, wobei der Luftfederbalg aus einem Elastomer gebildet ist, in dem ein gewebeförmiger Festigkeitsträger sowie in wenigstens einem endseitigen Wulst ein ringförmiger Kern eingebettet ist, und bei dem der wenigstens eine Kern von dem gewebeförmigen Festigkeitsträger zumindest teilweise umschlungen ist.

Zur Lösung der gestellten Aufgabe hinsichtlich der Schaffung eines Luftfederbalgs sieht die Erfindung vor, dass der Festigkeitsträger dicht zu wenigstens einem der Wülste in dem Elastomer in axialer Richtung des Luftfederbalgs nicht glatt sondern wellenförmig oder mäanderförmig verlaufend ausgebildet und/oder angeordnet ist.

Ein Festigkeitsträger eines Luftfederbalgs ist gemäß dem Stand der Technik in der Regel aus mehreren Gewebelagen aufgebaut. Bisher wurden die Enden des Festigkeitsträgers einfach um die Kerne der Wülste des Luftfederbalgs herumgelegt und diese Enden im Einspannbereich des Balgs anschließend an die Balgwand angedrückt. Dies konnte nach einem langdauernden Betrieb mit starken lateralen Bewegungen des Luftfederbalgs zu einem Ablösen der freien Enden des Festigkeitsträgers führen.

Der Erfindung lag die Erkenntnis zugrunde, dass das geschilderte Problem dann nicht entsteht, wenn den Gewebelagen des Festigkeitsträges bei einer lateralen Bewegung eines Fahrzeugchassis in Bezug zum Fahrwerk etwas mehr Spielraum in Bewegungsrichtung gegeben wird, um im Luftfederbalg auftretende Spannungen zu reduzieren. Hierzu sieht die Erfindung vor, dass die um die Kerne umgeschlagenen Endabschnitte des Festigkeitsträgers nicht wie bisher üblich gestreckt und glatt sondern wellenförmig oder mäanderförmig auf demselben beziehungsweise der Elastomerlage abgelegt werden. Hierdurch wird im Vergleich zu einem glatten Ablegen des umgeschlagenen Festigkeitsträgers eine größere Gewebelänge des Gewebematerials im Luftfederbalg vorgehalten. Beim Eintreten der oben beschriebenen lateralen Bewegung und einer entsprechenden Verformung des Luftfederbalgs sowie einer dabei auftretenden Zugspannung im Festigkeitsträgergewebe können sich die freien Enden des Festigkeitsträgergewebes in dem Elastomermaterial verformen und strecken. Dies führt zu einem deutlichen Spannungsabbau und verringert insbesondere Spannungsspitzen, sodass der oben beschriebene Schlingenaufriss des Luftfederbalges vermieden wird. Zudem bleibt der Luftfederbalg mittels seiner Wülste und Wulstkerne fest an den genannten Anschlussteilen befestigt.

In Weiterbildung der Erfindung kann vorgesehen sein, dass der Festigkeitsträger in seinem Bereich vor dem Umschlingen eines Kerns in axialer Richtung des Luftfederbalgs wellenförmig oder mäanderförmig ausgebildet und/oder angeordnet ist. Alternativ dazu kann vorgesehen sein, dass der Festigkeitsträger in seinem Bereich nach beziehungsweise hinter dem Umschlingen eines Kerns in axialer Richtung des Luftfederbalgs wellenförmig oder mäanderförmig ausgebildet und/oder angeordnet ist. Welche dieser Ausführungsformen gewählt wird hängt davon ab, ob und wenn ja mit welchen Hilfsmittelen sowie auf welche Weise die wellenförmige oder mäanderförmige Struktur des Festigkeitsträgers gebildet wird.

Außerdem kann vorgesehen sein, dass der Festigkeitsträger im Bereich eines seiner beiden freien Enden in axialer Richtung des Luftfederbalgs wellenförmig oder mäanderförmig ausgebildet und/oder angeordnet ist. Ebenso ist es möglich, dass der Festigkeitsträger im Bereich seiner beiden freien Enden in axialer Richtung des Luftfederbalgs wellenförmig oder mäanderförmig ausgebildet und/oder angeordnet ist. Welche dieser zuletzt genannten beiden Ausführungsformen realisiert wird, hängt unter anderem davon ab, ob der Luftfederbalg nur einen Kern oder zwei Kerne aufweist, und wie groß die im Betrieb auftretenden Lateralbewegungen im Bereich der Luftfeder voraussichtlich sein werden.

Der Festigkeitsträger kann im Bereich wenigstens eines seiner beiden freien Enden eine durch Prägung erzeugte und durch Vorvulkanisation mechanisch stabilisierte wellenförmige oder mäanderförmige Struktur aufweisen. Es ist aber auch möglich, zur Erzeugung einer wellenförmigen oder mäanderförmigen Struktur Hilfsmittel zu nutzen, welche in die Wand des Luftfederbalgs eingesetzt werden.

Um die genannte wellenförmige oder mäanderförmige Struktur der Gewebelagen des Festigkeitsträgers ausbilden zu können, ist die Nutzung eines diesbezüglichen Formgebungselements vorteilhaft. Erfindungsgemäß ist in dem Elastomer des Luftfederbalgs ein Formgebungselement angeordnet, dass das Formgebungselement in axialer Richtung des Luftfederbalgs eine wellenförmige oder mäanderförmige Oberflächenstruktur aufweist, und dass ein Abschnitt des Festigkeitsträgers auf diesem Formgebungselement zur Ausbildung einer wellenförmigen oder mäanderförmigen Struktur desselben flächenbündig angeordnet ist.

Das Formgebungselement kann eine Tragschicht aufweisen, auf der zur Ausbildung der wellenförmigen oder mäanderförmigen Oberflächenstruktur Formgebungsmittel angeordnet sind. Diese Formgebungsmittel können beispielsweise dickere Gewebefäden sein, welche im Wesentlichen in Umfangsrichtung des Luftfederbalgs angeordnet sind. Das Formgebungselement kann dadurch oder in Alleinstellung eine hohlzylindrische, gewellte Struktur aufweisen, wobei sich dessen Erhebungen und Senken in Umfangsrichtung des Formgebungselements erstrecken und in Axialrichtung des Luftfederbalgs voneinander beabstandet sind.

Zur Lösung der verfahrensbezogenen Aufgabe wird ein Verfahren in drei Varianten genutzt, deren Verfahrensmerkmale in den unabhängigen Verfahrensansprüchen definiert sind. Demnach betrifft die Erfindung jeweils ein Verfahren zur Herstellung eines Luftfederbalgs, der aus einem Elastomer gebildet ist, in dem ein gewebeförmiger Festigkeitsträger sowie in wenigstens einem endseitigen Wulst ein ringförmiger Kern eingebettet ist, und bei dem der wenigstens eine Kern von dem gewebeförmigen Festigkeitsträger zumindest teilweise umschlungen ist.

Das Verfahren gemäß einer ersten, jedoch nicht erfindungsgemäßen, Verfahrensvariante ist durch folgende Verfahrensschritte gekennzeichnet:
a) Auflegen einer unvulkanisierten inneren Elastomerschicht auf ein zylindrisches Wickelwerkzeug,
b) Auflegen eines gewebeförmigen Festigkeitsträgers auf die innere Elastomerschicht, welcher im Bereich wenigstens eines seiner beiden Enden eine wellenförmige oder mäanderförmige Struktur aufweist,
c) endseitiges Auflegen von wenigstens einem Kern auf die innere Elastomerschicht und den Festigkeitsträger,
d) Umschlingen des wenigstens einen Kerns mit dem Festigkeitsträger und Auflegen des umgeschlagenen Abschnitts des Festigkeitsträgers auf denselben im Bereich seiner wellenförmigen oder mäanderförmigen Struktur,
e) Vulkanisieren des Luftfederbalgs.

Gemäß einer zweiten Verfahrensvariante sind die folgenden Verfahrensschritte vorgesehen:
a) Auflegen einer unvulkanisierten inneren Elastomerschicht auf ein zylindrisches Wickelwerkzeug,
b) Auflegen zumindest eines Formgebungselements auf die innere Elastomerschicht dicht zu deren einen Ende,
c) Auflegen eines gewebeförmigen Festigkeitsträgers auf die innere Elastomerschicht und auf das Formgebungselement,
d) endseitiges Auflegen von wenigstens einem Kern auf die innere Elastomerschicht und den Festigkeitsträger,
e) Umschlingen des wenigstens einen Kerns mit dem Festigkeitsträger und Auflegen des umgeschlagenen Abschnitts des Festigkeitsträgers auf denselben,
f) Vulkanisieren des Luftfederbalgs.

Gemäß dieser zweiten Verfahrensvariante wird dem zum Kern hinlaufenden Bereich sowie vorzugsweise auch dem vom Kern zurückgeführten Bereich des gewebeförmigen Festigkeitsträgers die wellenförmige oder mäanderförmige Struktur aufgeprägt, da beide Lagen des Festigkeitsträgers unmittelbar übereinander auf dem Formgebungselement zur Ablage gelangen.

Abweichend davon sind gemäß einer dritten Verfahrensvariante die folgenden Verfahrensschritte vorgesehen:
a) Auflegen einer unvulkanisierten inneren Elastomerschicht auf ein zylindrisches Wickelwerkzeug,
b) Auflegen eines gewebeförmigen Festigkeitsträgers auf die innere Elastomerschicht,
c) endseitiges Auflegen von wenigstens einem Kern auf die innere Elastomerschicht und den Festigkeitsträger,
d) Auflegen von zumindest einem Formgebungselement auf den gewebeförmigen Festigkeitsträger dicht zum Kern,
e) Umschlingen des wenigstens einen Kerns mit dem Festigkeitsträger und Auflegen des umgeschlagenen Abschnitts des Festigkeitsträgers auf das Formgebungselement,
f) Vulkanisieren des Luftfederbalgs.

Gemäß dieser dritten Verfahrensvariante wird nur der um den Kern umgeschlagene Bereich des gewebeförmigen Festigkeitsträgers direkt auf den Festigkeitsträger abgelegt und diesem die wellenförmige oder mäanderförmige Struktur aufgeprägt.

Bei den drei Verfahrensvarianten kann als weiterer Verfahrensschritt vorgesehen sein, dass vor dem Vulkanisieren des Luftfederbalgs auf die innere Elastomerschicht, auf den Festigkeitsträger und gegebenenfalls auf die Formgebungsstruktur eine äußere Elastomerschicht abgelegt wird. Hierdurch wird die Wanddicke des Luftfederbalgs vergrößert und der gewebeförmige Festigkeitsträger sicher überdeckt.

Das Formgebungselement kann beispielsweise aus einem vorvulkanisierten oder vulkanisierten Elastomermaterial bestehen, sodass dessen erwähnte Oberflächenstruktur während des genannten Herstellungsprozesses sicher erhalten bleibt.

Die Erfindung betrifft auch eine Luftfeder, mit einem Luftfederbalg, welcher gemäß einem der Vorrichtungsansprüche beziehungsweise den gerade genannten Merkmalen aufgebaut und nach den Merkmalen eines der Verfahrensansprüche hergestellt ist, sowie ein Schienenfahrzeug mit mindestens einer solchen Luftfeder.

Die Erfindung wird nachstehend anhand von einem in der beigefügten Zeichnung dargestellten Ausführungsbeispiel näher erläutert. In dieser Zeichnung zeigt
Fig. 1 einen hälftigen Axialschnitt durch eine Luftfeder mit einem Luftfederbalg gemäß der Erfindung,
Fig. 2 einen endseitigen Abschnitt eines gewebeförmigen Festigkeitsträgers mit einer wellenförmigen oder mäanderförmigen Struktur,
Fig. 3 ein in der Wandung des Luftfederbalgs gemäß Fig. 1 angeordnetes Formgebungselement gemäß einer ersten Variante, und
Fig. 4 ein in der Wandung des Luftfederbalgs gemäß Fig. 1 angeordnetes Formgebungselement gemäß einer zweiten Variante.

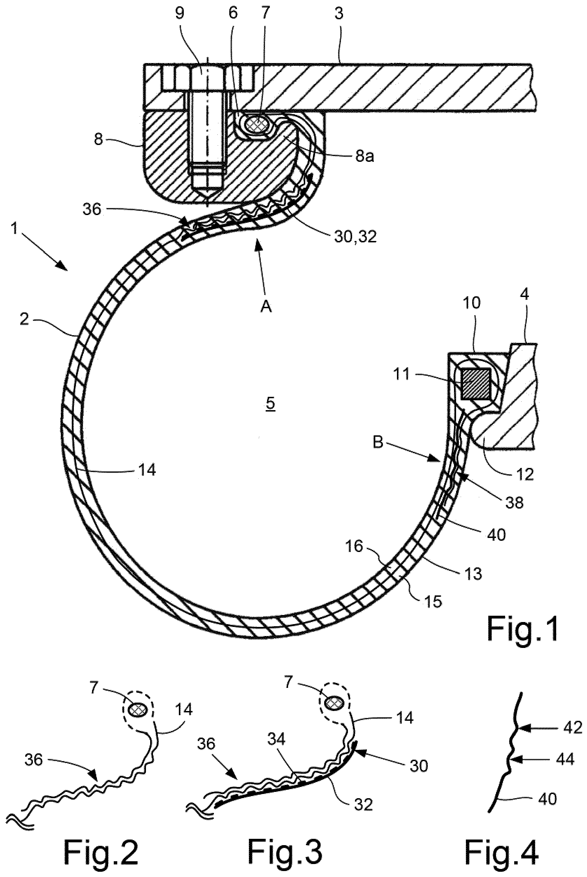

Die Fig. 1 zeigt demnach im hälftigen Längsschnitt durch eine Luftfeder 1, welche an einem hier nicht näher dargestellten Fahrwerk eines Schienenfahrzeugs zwischen einer Karosserie eines Waggons und einem Fahrschemel des Fahrwerks an der Unterseite des Waggons eingespannt sind. Eine solche Luftfeder 1 kann mit den gleichen Vorteilen auch in einem Kraftfahrzeug, beispielsweise einem Nutzfahrzeug, eingebaut sein.

Der Aufbau und die Funktionsweise dieser Luftfeder 1 ist an sich bekannt. Beispielsweise sei dazu auf die DE 10 2017 201 446 A1 sowie auf die bereits eingangs erwähnte DE 10 2013 108 694 A1 verwiesen. Die Fig. 1 beschränkt sich daher zur Vereinfachung jeweils lediglich auf einen Ausschnitt eines Axialschnitts durch die im Wesentlichen zylindrische Luftfeder 1, welche mit ihrer Symmetrieachse mit jeweils einem Anschlussteil senkrecht zwischen Fahrwerk und Karosserie eingespannt ist.

Demnach weist die in Fig. 1 vereinfacht dargestellte Luftfeder 1 gemäß der Erfindung einen Luftfederbalg 2 auf, der mit seinem in Gebrauchslage von oben gesehenen ersten offenen Ende an einem karosserieseitigen ersten Anschlussteil 3, hier ein plattenförmiger Luftfederdeckel, und mit seinem in Gebrauchslage zweiten offenen Ende an einem fahrwerkseitigen zweiten Anschlussteil 4, hier ein zylindrischer Luftfederkolben, dichtend befestigt ist. Das karosserieseitige erste Anschlussteil 3 wird im Folgenden Luftfederdeckel 3 genannt, das fahrwerkseitige zweite Anschlussteil 4 wird nachfolgend als Luftfederkolben 4 bezeichnet.

Der Luftfederbalg 2 ist weitgehend aus einem Elastomer hergestellt und begrenzt einen mit Druckluft gefüllten Arbeitsraum 5 wenigstens teilweise. Der Arbeitsraum 5 dient dazu, Kräften, welche zwischen dem Luftfederdeckel 3 und dem Luftfederkolben 4 wirken, durch eine Komprimierung eines von dem Arbeitsraum 5 eingeschlossenen Luftvolumens entgegenzuwirken. Wird eine Schienenfahrzeugfederung also in ihrer Vertikalrichtung mit einer Kraft beaufschlagt, wirken auf den Luftfederdeckel 3 und den Luftfederkolben 4 entsprechend entgegengesetzte Kräfte, sodass Luft in dem Arbeitsraum 5 komprimiert wird. Dies wiederum verursacht ein radiales Aufblähen des Luftfederbalgs 2 und/oder ein Abrollen des Luftfederbalgs 2 an dem Luftfederkolben 4, sodass es zu einer entsprechenden Reaktionskraft kommt, die einem vertikalen Zusammendrücken des Luftfederbalgs 2 entgegenwirkt.

Der Luftfederbalg 2 weist an seinem luftfederdeckelseitigen ersten offenen Ende einen als umlaufende Verdickung ausgebildeten ersten Wulst 6 auf. Der erste Wulst 6 weist vorliegend die Form eines an der Deckelseite abgeflachten Torus auf, in den ein ringförmiger erster Kern 7 eingelegt sowie einvulkanisiert ist. Der erste Kern 7 kann beispielsweise ein im Querschnitt kreisförmiger oder ellipsenförmiger Volldrahtkern sein. Alternativ dazu sind auch dehnbare oder nichtdehnbare andere Materialien, wie beispielsweise Kunststoffe oder Elastomere als Kernmaterialien möglich. Außerdem kann der Kern 7 als geschlossener oder offener Ring ausgebildet sein.

Der so verstärkte obere Rand des Luftfederbalgs 2 ist mittels eines metallischen Verschlussrings 8 an dem Luftfederdeckel 3 festgeklemmt. Dazu weist der Verschlussring 8 radial innen eine im Querschnitt den Rand des Luftfederbalgs 2 von außen umgreifende, nach oben ausgerichtete Nase 8a auf. Außerdem weist der Verschlussring 8 Gewindebohrungen auf, in die durch Bohrungen im Luftfederdeckel 3 gesteckte Schrauben 9 eingeschraubt sind.

Der Luftfederbalg 2 weist außerdem an seinem luftfederkolbenseitigen zweiten offenen Ende einen als umlaufende Verdickung ausgebildeten zweiten Wulst 10 auf. Der zweite Wulst 10 weist vorliegend im Wesentlichen die Form eines im Querschnitt rechteckigen Rings auf, der an seiner zu dem Luftfederkolben 4 zugewandten Außenseite konisch abgeschrägt ist und an einer entsprechend konisch geformten, umlaufenden Mantelfläche des Luftfederkolbens 4 formschlüssig anliegt. Außerdem sitzt der zweite Wulst 10 auf einer an dem Luftfederkolben 4 von der konisch geformten Mantelfläche übergehend ausgebildeten umlaufenden Felge 12 auf. Dadurch ist die Luftfeder 1 in Längsrichtung fixiert und gesichert. In den luftfederkolbenseitigen zweiten Wulst 10 ist ein ringförmiger zweiter Kern 11 mit einem quadratischen Querschnitt eingelegt, welcher den unteren Rand des Luftfederbalgs 2 verstärkt.

Die Balgwand 13 des Luftfederbalgs 2 besteht aus einer Elastomermatrix, die mit einem in das Elastomer eingelegten Gewebe eines Festigkeitsträgers 14 verstärkt ist. Der Festigkeitsträger 14 ist in diesem Ausführungsbeispiel radial zwischen einer radial äußeren Elastomerschicht 15 und einer radial inneren Elastomerschicht 16 in die Elastomermatrix eingebettet. Der Festigkeitsträger 14 ist zudem einerseits an dem luftfederdeckelseitigen ersten Kern 7 und andererseits an dem luftfederkolbenseitigen zweiten Kern 11 verankert.

Außerdem sind die beiden Enden des Festigkeitsträgers 14 um die beiden Wulstkerne 7, 11 herumgeführt und dann auf sich selbst beziehungsweise auf ein Formgebungselement 40 umgeschlagen. Dadurch sind die beiden Wulstkerne 7, 11 vollständig von dem Festigkeitsträger 14 umschlossen. Ein gegebenenfalls fertigungsbedingt unvermeidbarer schmaler Umschlingungsspalt an den Wulstkernen 7, 11 zwischen einem hinlaufenden und einem rücklaufenden Abschnitt des Festigkeitsträgers 14 bleibt hierbei beschreibungsbezogen idealisierend unberücksichtigt. Die beiden Enden des Festigkeitsträgers 14 erstrecken sich dabei ein Stück weit über den Anlagebereich des Luftfederbalgs 2 an dem Verschlussring 8 und an dem Luftfederkolben 4 hinaus.

Der Festigkeitsträger 14 besteht im vorliegenden Beispiel aus einer einzigen Gewebeplatte, welche mehrere Gewebelagen umfassen kann. Der Festigkeitsträger 14 beziehungsweise die Gewebeplatte besteht aus Fäden, die bei deren Einbettung in die Elastomermatrix mit einem Fadenwinkel die Balgwand 13 umlaufen. Durch das beschriebene Umlegen oder Umbucken des Festigkeitsträgers 14 auf sich selbst oder auf ein Formgebungselement 40 sind über jeweils zwei vergleichsweise kurze Abschnitte zwei übereinander liegende Gewebelagen erzeugt. Zudem wurde durch das beschriebene Umlegen oder Umbucken des Festigkeitsträgers 14 dessen Fadenwinkel geometrisch gespiegelt, so dass die Fäden der radial innenliegende ersten Gewebelage und der radial außenliegenden zweiten Gewebelage überkreuz in der Balgwand 13 umlaufen, wodurch die Elastomermatrix zusätzlich verstärkt ist.

Gemäß der Erfindung ist vorgesehen, dass der Festigkeitsträger 14 dicht zu wenigstens einem der Wülste 6, 10 in dem Elastomer in axialer Richtung des Luftfederbalgs 2 nicht glatt sondern wellenförmig oder mäanderförmig verlaufend ausgebildet und/oder angeordnet ist. Hierdurch wird im Vergleich zu einem glatten Ablegen des umgeschlagenen Festigkeitsträgers 14 eine größere Materiallänge des Gewebematerials im Luftfederbalg 2 vorgehalten. Beim Eintreten der oben beschriebenen lateralen Bewegung und einer entsprechenden Verformung des Luftfederbalges 2 sowie einer dabei auftretenden Zugspannung im Gewebe des Festigkeitsträgers 14 können sich die freien Enden des Festigkeitsträgers 14 in dem Elastomermaterial verformen und strecken. Dies führt zu einem deutlichen Spannungsabbau und verringert insbesondere Spannungsspitzen, sodass der oben beschriebene Schlingenaufriss des Luftfederbalges vermieden wird.

Die wellenförmige oder mäanderförmige Struktur des Festigkeitsträgers 14 ist gemäß einer in Fig. 2 schematisch dargestellten ersten Ausführungsform im Bereich 36 von wenigstens einem seiner beiden Enden durch eine Prägung desselben erzeugt und durch eine Vorvulkanisation mechanisch stabilisiert worden. Auf diesen Abschnitt des Festigkeitsträgers 14 ist der von dem Kern 7 zurückgeführte Abschnitt des Festigkeitsträgers 14 abgelegt, sodass dieser zurückgeführte Abschnitt die Geometrie der wellenförmigen oder mäanderförmigen Struktur angenommen hat.

Gemäß zwei weiterer, in den Figuren 1 sowie 3 und 4 dargestellten Ausführungsformen, kann zur Erzeugung der wellenförmigen oder mäanderförmigen Struktur beziehungsweise zur Ausbildung des wellenförmigen oder mäanderförmigen Verlaufs des Festigkeitsträgers 14 innerhalb der Balgwand 13 ein Formgebungselement 30, 40 genutzt werden, welches in das Elastomermaterial der Balgwand 13 mit eingefügt ist. Wie insbesondere die Figuren 1 sowie 3 veranschaulichen, kann das Formgebungselement 30 beispielsweise im oberen Bereich A des Luftfederbalgs 2 aus einer Tragschicht 32 mit darauf befestigten oder darauf ausgebildeten ersten Formgebungsmitteln 34 bestehen. Die Formgebungsmittel 34 sind dabei erhaben auf einer Seite der Tragschicht 32 des ersten Formgebungselements 30 angeordnet, sodass dieses einen lateralen Verlauf mit Erhebungen und Senken aufweist. Der in dem Bereich A des Luftfederbalgs 2 auf dieses ersten Formgebungselement 30 flächenbündig aufgebrachte und zu dem ersten Kern 7 hinlaufende Festigkeitsträgerabschnitt folgt dabei der von dem ersten Formgebungselement 30 vorgegebenen Oberflächenstruktur, sodass sich an dem Festigkeitsträger 14 ein wellenförmiger oder mäanderförmiger Bereich 36 ausbildet.

Wie die Figuren 1 und 3 zeigen, ist das erste Formgebungselement 30 unmittelbar auf der inneren Elastomerschicht 16 der Balgwand 13 angeordnet, sodass der zum ersten Kern 7 im oberen Wulst 6 hinlaufende Abschnitt des Festigkeitsträgers 14 in direkten Kontakt mit dem ersten Formgebungsmittel 30 gelangte und von diesem seine wellenförmige oder mäanderförmige Oberflächenstruktur aufgezwungen bekam. Da die durch die Formgebungsmittel 34 gebildeten Erhebungen und Senken des ersten Formgebungsmittels 30 im Vergleich zur Materialdicke des Festigkeitsträgers 14 groß sind, wurde auch dem von dem ersten Kern 7 zurückgeführten endseitigen Abschnitt des Festigkeitsträgers 14 eine solche wellenförmige oder mäanderförmige Oberflächenstruktur aufgeprägt.

Das im unteren Bereich B des Luftfederbalgs 2 angeordnete zweite Formgebungselement 40 weist eine vergleichsweise einfache Bauform auf. Es besteht aus einem bereits vor dessen Einbau in die Balgwand 13 vulkanisierten oder vorvulkanisierten wellenförmigen Bauteil. Gemäß der in Fig. 4 dargestellten Querschnittsansicht weist dieses zweite Formgebungselement 40 eine wellenförmige Struktur mit integral an diesem ausgebildeten Erhebungen 42 und Senken 44 auf. Dieses zweite Formgebungselement 40 ist erkennbar auf die radiale Außenseite eines zum unteren Kern 10 hinlaufenden Abschnitts des Festigkeitsträgers 14 sowie auf die radiale Außenseite der inneren Elastomerschicht 16 aufgelegt. Außerdem ist der vom zweiten Kern 10 zurückgeführte Abschnitt des Festigkeitsträgers 14 auf der radialen Außenseite des zweiten Formgebungselements 40 abgelegt. Durch ein flächenbündiges Auflegen des zurückgeführten Abschnitts des Festigkeitsträgers 14 auf der radialen Außenseite des zweiten Formgebungselements 40 ist ein Bereich 38 des Festigkeitsträgers 14 geschaffen, welchem die wellenförmige Oberflächenstruktur des zweiten Formgebungsmittels 40 angeprägt ist.

Zur Herstellung einer die Merkmale der Erfindung aufweisenden Luftfeder 1 werden nachfolgend drei zueinander alternative Herstellverfahren beschrieben.

Die erste, jedoch nicht erfindungsgemäße, Verfahrensvariante ist durch folgende Verfahrensschritte gekennzeichnet:
a) Auflegen einer unvulkanisierten inneren Elastomerschicht 16 auf ein zylindrisches Wickelwerkzeug,
b) Auflegen eines gewebeförmigen Festigkeitsträgers 14 auf die innere Elastomerschicht 16, welcher im Bereich 36, 38 wenigstens eines seiner beiden Enden eine wellenförmige oder mäanderförmige Struktur aufweist,
c) endseitiges Auflegen von wenigstens einem Kern 7 auf die innere Elastomerschicht 16 und den Festigkeitsträger 14,
d) Umschlingen des wenigstens einen Kerns 7 mit dem Festigkeitsträger 14 und Auflegen des umgeschlagenen Abschnitts des Festigkeitsträgers 14 auf denselben im Bereich seiner wellenförmigen oder mäanderförmigen Struktur,
e) Vulkanisieren des Luftfederbalgs 2.

Demnach weist der gewebeförmige Festigkeitsträger 14, welcher als Flächengebilde nach seinem Ablegen auf die innere Elastomerschicht 16 eine etwa zylindrische Struktur hat, im Bereich zumindest eines seiner beiden Enden eine wellenförmige oder mäanderförmige Struktur auf. Diese wellenförmige oder mäanderförmige Struktur des Festigkeitsträgers 14 wurde beispielsweise durch einen vorherigen Prägevorgang erzeugt und vorzugsweise mittels einer Vorvulkanisation mechanisch soweit stabilisiert, dass diese wellenförmige oder mäanderförmige Struktur bei der abschließenden Vulkanisation des Luftfederbalgs zumindest weitgehend erhalten bleibt. An dieser Stelle sei angemerkt, dass die Erhebungen und die Senken der wellenförmigen oder mäanderförmigen Struktur des Festigkeitsträgers 14 beispielsweise so hoch oder so tief wie dreifache Fadendicke des Festigkeitsträgers 14.

Die zweite Verfahrensvariante nutzt zur Erzeugung der wellenförmigen oder mäanderförmigen Struktur des Festigkeitsträgers 14 ein erstes Formgebungselement 30 und weist die nachfolgenden Verfahrensabschnitte auf:
a) Auflegen einer unvulkanisierten inneren Elastomerschicht 16 auf ein zylindrisches Wickelwerkzeug,
b) Auflegen zumindest eines Formgebungselements 30 auf die innere Elastomerschicht 16 dicht zu deren einen Ende,
c) Auflegen eines gewebeförmigen Festigkeitsträgers 14 auf die innere Elastomerschicht 16 und auf das Formgebungselement 30,
d) endseitiges Auflegen von wenigstens einem Kern 7 auf die innere Elastomerschicht 16 und den Festigkeitsträger 14,
e) Umschlingen des wenigstens einen Kerns 7 mit dem Festigkeitsträger 14 und Auflegen des umgeschlagenen Abschnitts des Festigkeitsträgers 14 auf denselben,
f) Vulkanisieren des Luftfederbalgs 2.

Auch die dritte Verfahrensvariante nutzt zur Erzeugung der wellenförmigen oder mäanderförmigen Struktur des Festigkeitsträgers 14 ein Formgebungselement 40 und ist durch die nachfolgenden Verfahrensabschnitte gekennzeichnet:
a) Auflegen einer unvulkanisierten inneren Elastomerschicht 16 auf ein zylindrisches Wickelwerkzeug,
b) Auflegen eines gewebeförmigen Festigkeitsträgers 14 auf die innere Elastomerschicht 16,
c) endseitiges Auflegen von wenigstens einem Kern 10 auf die innere Elastomerschicht 16 und den Festigkeitsträger 14,
d) Auflegen von zumindest einem Formgebungselement 40 auf den gewebeförmigen Festigkeitsträger 14 dicht zum Kern 10,
e) Umschlingen des wenigstens einen Kerns 10 mit dem Festigkeitsträger 14 und Auflegen des umgeschlagenen Abschnitts des Festigkeitsträgers 14 auf das Formgebungselement 40,
f) Vulkanisieren des Luftfederbalgs 2.

Erkennbar wird bei der zweiten Verfahrensvariante das Formgebungselement 30 direkt auf die innere Elastomerschicht 16 der Balgwand 13 aufgelegt und zumindest der zum Kern 7 hinlaufende Abschnitt des Festigkeitsträgers 14 wellenförmig oder mäanderförmig verformt. Bei der dritten Verfahrensvariante wird das Formgebungselement 40 auf den zum Kern 11 hinlaufenden Abschnitt des Festigkeitsträgers 14 aufgelegt und der vom Kern 11 zurückgeführte Endabschnitt des Festigkeitsträgers 14 mittels des Formgebungselements 40 wellenförmig oder mäanderförmig verformt.

### Bezugszeichenliste

- 1: Luftfeder
- 2: Luftfederbalg
- 3: Erstes Anschlussteil, Luftfederdeckel
- 4: Zweites Anschlussteil, Luftfederkolben
- 5: Arbeitsraum, Druckraum des Luftfederbalgs
- 6: Erster Wulst, in Gebrauchslage oberer Wulst
- 7: Kern des ersten Wulstes
- 8: Verschlussring
- 8a: Nase an dem Verschlussring
- 9: Schraube zur Befestigung des Verschlussrings
- 10: Zweiter Wulst, in Gebrauchslage unterer Wulst
- 11: Kern des zweiten Wulstes
- 12: Felge am Luftfederkolben
- 13: Balgwand des Luftfederbalgs
- 14: Festigkeitsträger, Gewebe
- 15: Äußere Elastomerschicht
- 16: Innere Elastomerschicht
- 30: Formgebungselement (1. Variante)
- 32: Tragschicht des Formgebungselements 30
- 34: Formgebungsmittel des Formgebungselements 30
- 36: Erster wellenförmiger oder mäanderförmiger Bereich
- 38: Zweiter wellenförmiger oder mäanderförmiger Bereich
- 40: Formgebungselement (2. Variante)
- 42: Erhebungen am Formgebungselement 40
- 44: Senken am Formgebungselement 40

## Patentansprüche

1. Luftfederbalg (2) einer Luftfeder (1), welcher mit seinen beiden offenen Enden an Anschlussteilen (3, 4) von zwei gegeneinander beabstandeten Bauteilen dichtend befestigbar ist, und der im montiertem Zustand der Luftfeder (1) einen mit Druckluft gefüllten Arbeitsraum (5) wenigstens teilweise begrenzt, wobei der Luftfederbalg (2) aus einem Elastomer gebildet ist, in dem ein gewebeförmiger Festigkeitsträger (14) sowie in wenigstens einem endseitigen Wulst (6, 10) ein ringförmiger Kern (7, 11) eingebettet ist, und bei dem der wenigstens eine Kern (7, 11) von dem gewebeförmigen Festigkeitsträger (14) zumindest teilweise umschlungen ist, wobei der Festigkeitsträger (14) dicht zu wenigstens einem der Wülste (6, 10) in dem Elastomer in axialer Richtung des Luftfederbalgs (2) nicht glatt sondern wellenförmig oder mäanderförmig verlaufend ausgebildet und/oder angeordnet ist, **dadurch gekennzeichnet, dass** in dem Elastomer des Luftfederbalgs (2) ein Formgebungselement (30, 40) angeordnet ist, dass das Formgebungselement (30, 40) in axialer Richtung des Luftfederbalgs (2) eine wellenförmige oder mäanderförmige Oberflächenstruktur aufweist, und dass ein Abschnitt (36, 38) des Festigkeitsträgers (14) auf diesem Formgebungselement (30, 40) zur Ausbildung einer wellenförmigen oder mäanderförmigen Struktur desselben flächenbündig angeordnet ist.

2. Luftfederbalg nach Anspruch 1, **dadurch gekennzeichnet, dass** der Festigkeitsträger (14) im Bereich vor dem Umschlingen eines Kerns (7, 11) in axialer Richtung des Luftfederbalgs (2) wellenförmig oder mäanderförmig ausgebildet und/oder angeordnet ist.

3. Luftfederbalg nach Anspruch 1, **dadurch gekennzeichnet, dass** der Festigkeitsträger (14) im Bereich nach dem Umschlingen eines Kerns (7, 11) in axialer Richtung des Luftfederbalgs (2) wellenförmig oder mäanderförmig ausgebildet und/oder angeordnet ist.

4. Luftfederbalg nach einem der Ansprüche 1 bis 3, **dadurch gekennzeichnet, dass** der Festigkeitsträger (14) im Bereich eines seiner beiden Enden in axialer Richtung des Luftfederbalgs (2) wellenförmig oder mäanderförmig ausgebildet und/oder angeordnet ist.

5. Luftfederbalg nach einem der Ansprüche 1 bis 3, **dadurch gekennzeichnet, dass** der Festigkeitsträger (14) im Bereich beider Enden in axialer Richtung des Luftfederbalgs (2) wellenförmig oder mäanderförmig ausgebildet und/oder angeordnet ist.

6. Luftfederbalg nach einem der Ansprüche 1 bis 5, **dadurch gekennzeichnet, dass** der Festigkeitsträger (14) im Bereich (36, 38) wenigstens eines seiner beiden Enden eine durch Prägung erzeugte und durch Vorvulkanisation stabilisierte wellenförmige oder mäanderförmige Struktur aufweist.

7. Luftfederbalg nach einem der Ansprüche 1 bis 6, **dadurch gekennzeichnet, dass** das Formgebungselement (30, 40) eine Tragschicht (32) aufweist, auf der zur Ausbildung der wellenförmigen oder mäanderförmigen Oberflächenstruktur Formgebungsmittel (34) angeordnet sind.

8. Verfahren zur Herstellung eines Luftfederbalgs (2), der aus einem Elastomer gebildet ist, in dem ein gewebeförmiger Festigkeitsträger (14) sowie in wenigstens einem endseitigen Wulst (6, 10) ein ringförmiger Kern (7, 11) eingebettet ist, und bei dem der wenigstens eine Kern (7, 11) von dem gewebeförmigen Festigkeitsträger (14) zumindest teilweise umschlungen ist, **gekennzeichnet durch** folgende Verfahrensschritte,
a) Auflegen einer unvulkanisierten inneren Elastomerschicht (16) auf ein zylindrisches Wickelwerkzeug,
b) Auflegen zumindest eines Formgebungselements (30) auf die innere Elastomerschicht (16) dicht zu deren einen Ende,
c) Auflegen eines gewebeförmigen Festigkeitsträgers (14) auf die innere Elastomerschicht (16) und auf das Formgebungselement (30),
d) endseitiges Auflegen von wenigstens einem Kern (7) auf die innere Elastomerschicht (16) und den Festigkeitsträger (14),
e) Umschlingen des wenigstens einen Kerns (7) mit dem Festigkeitsträger (14) und Auflegen des umgeschlagenen Abschnitts des Festigkeitsträgers (14) auf denselben,
f) Vulkanisieren des Luftfederbalgs (2).

9. Verfahren zur Herstellung eines Luftfederbalgs (2), der aus einem Elastomer gebildet ist, in dem ein gewebeförmiger Festigkeitsträger (14) sowie in wenigstens einem endseitigen Wulst (6, 10) ein ringförmiger Kern (7, 11) eingebettet ist, und bei dem der wenigstens eine Kern (7, 11) von dem gewebeförmigen Festigkeitsträger (14) zumindest teilweise umschlungen ist, **gekennzeichnet durch** folgende Verfahrensschritte,
a) Auflegen einer unvulkanisierten inneren Elastomerschicht (16) auf ein zylindrisches Wickelwerkzeug,
b) Auflegen eines gewebeförmigen Festigkeitsträgers (14) auf die innere Elastomerschicht (16),
c) endseitiges Auflegen von wenigstens einem Kern (10) auf die innere Elastomerschicht (16) und den Festigkeitsträger (14),
d) Auflegen von zumindest einem Formgebungselement (40) auf den gewebeförmigen Festigkeitsträger (14) dicht zum Kern (10),
e) Umschlingen des wenigstens einen Kerns (10) mit dem Festigkeitsträger (14) und Auflegen des umgeschlagenen Abschnitts des Festigkeitsträgers (14) auf das Formgebungselement (40),
f) Vulkanisieren des Luftfederbalgs (2).

10. Verfahren nach einem der Ansprüche 8 bis 9, **dadurch gekennzeichnet, dass** vor dem Vulkanisieren des Luftfederbalgs (2) auf die innere Elastomerschicht (16) und den Festigkeitsträger (14) eine äußere Elastomerschicht (15) abgelegt wird.

11. Verfahren nach einem der Ansprüche 8 bis 9, **dadurch gekennzeichnet, dass** vor dem Vulkanisieren des Luftfederbalgs (2) auf die innere Elastomerschicht (16), das Formgebungselement (30, 40) und den Festigkeitsträger (14) eine äußere Elastomerschicht (15) abgelegt wird.

12. Luftfeder (1), mit einem Luftfederbalg (2), welcher gemäß einem der Vorrichtungsansprüche 1 bis 7 aufgebaut und nach einem der Verfahrensansprüche 8 bis 11 hergestellt ist.

## Claims

1. Air spring bellows (2) of an air spring (1), which air spring bellows (2) can be fastened sealingly with its two open ends to connector parts (3, 4) of two components spaced apart from each other, and which air spring bellows (2), in the mounted state of the air spring (1), at least partially delimits a working space (5) filled with compressed air, wherein the air spring bellows (2) is formed from an elastomer in which a woven-fabric strength member (14) is embedded and an annular core (7, 11) is embedded in at least one end-side bead (6, 10), and in which air spring bellows (2) the at least one core (7, 11) is at least partially looped by the woven-fabric strength member (14), wherein the strength member (14), close to at least one of the beads (6, 10) in the elastomer, is not smooth but instead designed and/or arranged undulating or meandering in the axial direction of the air spring bellows (2), **characterized in that** a shaping element (30, 40) is arranged in the elastomer of the air spring bellows (2), **in that** the shaping element (30, 40) has an undulating or meandering surface structure in the axial direction of the air spring bellows (2), and **in that** a section (36, 38) of the strength member (14) is arranged flush on this shaping element (30, 40) in order to form an undulating or meandering structure of the strength member (14).

2. Air spring bellows according to Claim 1, **characterized in that** the strength member (14) is designed and/or arranged undulating or meandering in the axial direction of the air spring bellows (2) in the region before looping around a core (7, 11).

3. Air spring bellows according to Claim 1, **characterized in that** the strength member (14) is designed and/or arranged undulating or meandering in the axial direction of the air spring bellows (2) in the region after looping around a core (7, 11).

4. Air spring bellows according to one of Claims 1 to 3, **characterized in that** the strength member (14) is designed and/or arranged undulating or meandering in the axial direction of the air spring bellows (2) in the region of one of its two ends.

5. Air spring bellows according to one of Claims 1 to 3, **characterized in that** the strength member (14) is designed and/or arranged undulating or meandering in the axial direction of the air spring bellows (2) in the region of both ends.

6. Air spring bellows according to one of Claims 1 to 5, **characterized in that** the strength member (14) has, in the region (36, 38) of at least one of its two ends, an undulating or meandering structure that is produced by embossing and stabilized by pre-vulcanization.

7. Air spring bellows according to one of Claims 1 to 6, **characterized in that** the shaping element (30, 40) has a support layer (32) on which shaping means (34) are arranged for forming the undulating or meandering surface structure.

8. Method for producing an air spring bellows (2) which is formed from an elastomer in which a woven-fabric strength member (14) is embedded and an annular core (7, 11) is embedded in at least one end-side bead (6, 10), and in which air spring bellows (2) the at least one core (7, 11) is at least partially looped by the woven-fabric strength member (14), **characterized by** the following method steps:
a) placing an unvulcanized inner elastomer layer (16) onto a cylindrical winding tool,
b) placing at least one shaping element (30) onto the inner elastomer layer (16), close to one end thereof,
c) placing a woven-fabric strength member (14) onto the inner elastomer layer (16) and onto the shaping element (30),
d) placing at least one core (7) at the end onto the inner elastomer layer (16) and the strength member (14),
e) looping the strength member (14) around the at least one core (7) and placing the looped-back section of the strength member (14) onto same,
f) vulcanizing the air spring bellows (2).

9. Method for producing an air spring bellows (2) which is formed from an elastomer in which a woven-fabric strength member (14) is embedded and an annular core (7, 11) is embedded in at least one end-side bead (6, 10), and in which air spring bellows (2) the at least one core (7, 11) is at least partially looped by the woven-fabric strength member (14), **characterized by** the following method steps:
a) placing an unvulcanized inner elastomer layer (16) onto a cylindrical winding tool,
b) placing a woven-fabric strength member (14) onto the inner elastomer layer (16),
c) placing at least one core (10) at the end onto the inner elastomer layer (16) and the strength member (14),
d) placing at least one shaping element (40) onto the woven-fabric strength member (14) close to the core (10),
e) looping the strength member (14) around the at least one core (10) and placing the looped-back section of the strength member (14) onto the shaping element (40),
f) vulcanizing the air spring bellows (2).

10. Method according to one of Claims 8 to 9, **characterized in that** an outer elastomer layer (15) is deposited on the inner elastomer layer (16) and the strength member (14) before the air spring bellows (2) is vulcanized.

11. Method according to one of Claims 8 to 9, **characterized in that** an outer elastomer layer (15) is deposited on the inner elastomer layer (16), the shaping element (30, 40) and the strength member (14) before the air spring bellows (2) is vulcanized.

12. Air spring (1), having an air spring bellows (2) constructed according to one of device claims 1 to 7 and produced according to one of method claims 8 to 11.

## Revendications

1. Soufflet de ressort pneumatique (2) d'un ressort pneumatique (1), qui peut être fixé de manière étanche par ses deux extrémités ouvertes à des pièces de raccordement (3, 4) de deux composants espacés l'un de l'autre, et qui, à l'état monté du ressort pneumatique (1), délimite au moins partiellement une chambre de travail (5) remplie d'air comprimé, le soufflet de ressort pneumatique (2) étant formé d'un élastomère, dans lequel est incorporé un support de résistance (14) en forme de tissu ainsi qu'un noyau annulaire (7, 11) dans au moins un bourrelet d'extrémité (6, 10), et dans lequel l'au moins un noyau (7, 11) est entouré au moins partiellement par le support de résistance (14) en forme de tissu, le support de résistance (14) étant réalisé et/ou agencé de manière étanche par rapport à au moins l'un des bourrelets (6, 10) dans l'élastomère dans la direction axiale du soufflet de ressort pneumatique (2) non pas de manière lisse mais en s'étendant sous forme ondulée ou en méandres, **caractérisé en ce qu'**un élément de mise en forme (30, 40) est agencé dans l'élastomère du soufflet de ressort pneumatique (2), **en ce que** l'élément de mise en forme (30, 40) présente dans la direction axiale du soufflet de ressort pneumatique (2) une structure de surface sous forme ondulée ou en méandres, et **en ce qu'**une section (36, 38) du support de résistance (14) est agencée à fleur sur cet élément de mise en forme (30, 40) pour réaliser une structure ondulée ou en méandres de celui-ci.

2. Soufflet de ressort pneumatique selon la revendication 1, **caractérisé en ce que** le support de résistance (14) est réalisé et/ou agencé sous forme ondulée ou en méandres dans la zone avant l'enroulement autour d'un noyau (7, 11) dans la direction axiale du soufflet de ressort pneumatique (2).

3. Soufflet de ressort pneumatique selon la revendication 1, **caractérisé en ce que** le support de résistance (14) est réalisé et/ou agencé sous forme ondulée ou en méandres dans la zone après l'enroulement autour d'un noyau (7, 11) dans la direction axiale du soufflet de ressort pneumatique (2).

4. Soufflet de ressort pneumatique selon l'une quelconque des revendications 1 à 3, **caractérisé en ce que** le support de résistance (14) est réalisé et/ou agencé sous forme ondulée ou en méandres dans la zone de l'une de ses deux extrémités dans la direction axiale du soufflet de ressort pneumatique (2).

5. Soufflet de ressort pneumatique selon l'une quelconque des revendications 1 à 3, **caractérisé en ce que** le support de résistance (14) est réalisé et/ou agencé sous forme ondulée ou en méandres dans la zone des deux extrémités dans la direction axiale du soufflet de ressort pneumatique (2).

6. Soufflet de ressort pneumatique selon l'une quelconque des revendications 1 à 5, **caractérisé en ce que** le support de résistance (14) présente, dans la zone (36, 38) d'au moins l'une de ses deux extrémités, une structure sous forme ondulée ou en méandres, obtenue par estampage et stabilisée par prévulcanisation.

7. Soufflet de ressort pneumatique selon l'une quelconque des revendications 1 à 6, **caractérisé en ce que** l'élément de mise en forme (30, 40) présente une couche de support (32) sur laquelle sont agencés des moyens de mise en forme (34) pour réaliser la structure de surface sous forme ondulée ou en méandres.

8. Procédé de fabrication d'un soufflet de ressort pneumatique (2) qui est formé d'un élastomère dans lequel est incorporé un support de résistance (14) en forme de tissu ainsi qu'un noyau annulaire (7, 11) dans au moins un bourrelet d'extrémité (6, 10), et dans lequel l'au moins un noyau (7, 11) est entouré au moins partiellement par le support de résistance (14) en forme de tissu, **caractérisé par** les étapes de procédé suivantes
a) la pose d'une couche élastomère intérieure non vulcanisée (16) sur un outil d'enroulement cylindrique,
b) la pose d'au moins un élément de mise en forme (30) sur la couche d'élastomère intérieure (16) de manière étanche à une extrémité de celle-ci,
c) la pose d'un support de résistance en forme de tissu (14) sur la couche d'élastomère intérieure (16) et sur l'élément de mise en forme (30),
d) la pose à l'extrémité d'au moins un noyau (7) sur la couche d'élastomère intérieure (16) et le support de résistance (14),
e) l'enroulement de l'au moins un noyau (7) avec le support de résistance (14) et la pose de la section enroulée du support de résistance (14) sur lui-même,
f) la vulcanisation du soufflet de ressort pneumatique (2).

9. Procédé de fabrication d'un soufflet de ressort pneumatique (2) qui est formé d'un élastomère dans lequel est incorporé un support de résistance (14) en forme de tissu ainsi qu'un noyau annulaire (7, 11) dans au moins un bourrelet d'extrémité (6, 10), et dans lequel l'au moins un noyau (7, 11) est entouré au moins partiellement par le support de résistance (14) en forme de tissu, **caractérisé par** les étapes de procédé suivantes
a) la pose d'une couche d'élastomère intérieure non vulcanisée (16) sur un outil d'enroulement cylindrique,
b) la pose d'un support de résistance en forme de tissu (14) sur la couche d'élastomère intérieure (16),
c) la pose à l'extrémité d'au moins un noyau (10) sur la couche d'élastomère intérieure (16) et le support de résistance (14),
d) la pose d'au moins un élément de mise en forme (40) sur le support de résistance en forme de tissu (14) de manière étanche par rapport au noyau (10),
e) l'enroulement de l'au moins un noyau (10) avec le support de résistance (14) et la pose de la section enroulée du support de résistance (14) sur l'élément de mise en forme (40),
f) la vulcanisation du soufflet de ressort pneumatique (2).

10. Procédé selon l'une quelconque des revendications 8 à 9, **caractérisé en ce qu'**une couche d'élastomère extérieure (15) est déposée sur la couche d'élastomère intérieure (16) et le support de résistance (14) avant la vulcanisation du soufflet de ressort pneumatique (2).

11. Procédé selon l'une quelconque des revendications 8 à 9, **caractérisé en ce qu'**une couche d'élastomère extérieure (15) est déposée sur la couche d'élastomère intérieure (16), l'élément de mise en forme (30, 40) et le support de résistance (14) avant la vulcanisation du soufflet de ressort pneumatique (2).

12. Ressort pneumatique (1), avec un soufflet de ressort pneumatique (2), qui est construit selon l'une quelconque des revendications de dispositif 1 à 7 et fabriqué selon l'une quelconque des revendications de procédé 8 à 11.
